(19) Europäisches Patentamt
European Patent Office
Office européen des brevets

(11) **EP 3 634 850 B1**

(12) **EUROPÄISCHE PATENTSCHRIFT**

(45) Veröffentlichungstag und Bekanntmachung des Hinweises auf die Patenterteilung:
**11.08.2021  Patentblatt 2021/32**

(21) Anmeldenummer: **18734088.0**

(22) Anmeldetag: **06.06.2018**

(51) Int Cl.:
*G05D 1/08* *(2006.01)*    *B64C 29/00* *(2006.01)*

(86) Internationale Anmeldenummer:
**PCT/EP2018/064934**

(87) Internationale Veröffentlichungsnummer:
**WO 2018/224567 (13.12.2018 Gazette 2018/50)**

(54) **STEUERUNGSVERFAHREN ZUR STEUERUNG EINES GIER- UND EINES ROLLWINKELS EINES SENKRECHT STARTENDEN FLUGZEUGS**

CONTROL METHOD FOR CONTROLLING A YAW ANGLE AND A ROLL ANGLE OF AN AIRCRAFT THAT TAKES OFF VERTICALLY

PROCÉDÉ DE COMMANDE POUR LA COMMANDE D'UN ANGLE DE LACET ET DE ROULIS D'UN AVION À DÉMARRAGE VERTICAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2017   DE 102017112452**

(43) Veröffentlichungstag der Anmeldung:
**15.04.2020   Patentblatt 2020/16**

(73) Patentinhaber:
• **Hesselbarth, Jonathan**
  **64283 Darmstadt (DE)**
• **Wingcopter GmbH**
  **64295 Darmstadt (DE)**

(72) Erfinder: **HESSELBARTH, Jonathan**
  **64283 Darmstadt (DE)**

(74) Vertreter: **Habermann Intellectual Property Partnerschaft von Patentanwälten mbB Dolivostraße 15A 64293 Darmstadt (DE)**

(56) Entgegenhaltungen:
**WO-A1-2017/077144     DE-A1-102014 000 509 US-A1- 2012 261 523**

**Beschreibung**

Die Erfindung betrifft ein Steuerungsverfahren zur Steuerung eines Gier- und eines Rollwinkels eines senkrecht startenden Flugzeugs mit mindestens zwei in einander gegenüberliegenden Seitenbereichen des Flugzeugs beabstandet zu einem Rumpf des Flugzeugs angeordneten Antriebsgruppen, wobei jede Antriebsgruppe mindestens eine erste Antriebseinheit aufweist, wobei die erste Antriebseinheit in eine Horizontalfluglage und eine Vertikalfluglage um einen Schwenkwinkel $\alpha$ schwenkbar beabstandet zu dem Rumpf angeordnet ist.

Senkrecht startende Flugzeuge werden unter anderem als Drohnen und im militärischen Bereich eingesetzt. Diese Flugzeuge weisen üblicherweise zwei auf gegenüberliegenden Seiten eines Rumpfs angeordnete Flügel auf, wobei an den Flügeln jeweils zwei Antriebseinheiten in an den jeweiligen Einsatzzweck angepassten und mit den Flügeln starr verbundenen Tragelementen, wie beispielsweise Gondeln, schwenkbar gelagert angeordnet sind. Es sind auch Flugzeuge bekannt, bei denen kein separater Rumpf ausgebildet ist und der Flügel aus zwei entlang der Längsachse symmetrisch ausgestalteten Flügelhälften gebildet ist, wobei an den Flügelhälften jeweils zwei Antriebseinheiten in an den jeweiligen Einsatzzweck angepassten und mit den Flügelhälften starr verbundenen Tragelementen schwenkbar gelagert angeordnet sind.

Zudem sind aus dem Stand der Technik senkrecht startende Flugzeuge bekannt, bei denen die Antriebseinheiten direkt an den Flügeln, beispielsweise an einer innerhalb des Flügels verlaufenden Tragstruktur, schwenkbar gelagert sind. Ein solches senkrecht startendes Flugzeug wird in der Druckschrift WO 2014/016226 A1 beschrieben. Bei diesem senkrecht startenden Flugzeug ist vorgesehen, dass in der Horizontalfluglage die erste Antriebseinheit oberhalb einer Flügelfläche und die zweite Antriebseinheit unterhalb der Flügelfläche an dem Flügel angeordnet sind, und dass in der Vertikalfluglage die erste Antriebseinheit und die zweite Antriebseinheit in einer näherungsweise horizontalen Ebene angeordnet sind. Auf diese Weise erreicht man in der Vertikalflugphase in Bodennähe einen einheitlichen Bodeneffekt der ersten und zweiten Antriebseinheit, so dass ein ruhigeres Flugverhalten insbesondere in der Start- und Landephase erreicht wird. In der Horizontalfluglage strömen sich die erste Antriebseinheit die zweite Antriebseinheit nicht gegenseitig an, so dass hierdurch keine Wirkungsgradverluste eintreten.

In der Druckschrift US 2012/261523 A1 ist ein senkrecht startendes Flugzeug und ein Verfahren zum Betreiben eines senkrecht startenden Flugzeugs mit einer Vielzahl von Propellerantrieben offenbart. Die Propellerantriebe sind auf Trägern angeordnet, wobei die Träger drehbar mit den Flügeln des Flugzeugs verbunden sind. Die Propellerantriebe können durch Drehung der Träger aus einer Vertikalfluglage in einer Horizontalfluglage gebracht werden. In der Vertikalfluglage erzeugen die Propellerantriebe den zum Aufsteigendes Flugzeugs notwendigen Schub. In der Horizontalfluglage erzeugen die Propellerantriebe den zum Flugbetrieb notwendigen Vorschub. Bei dem Flugbetrieb in der Horizontalfluglage erzeugen die Flügel des Flugzeugs den Auftrieb erzeugen.

In der Druckschrift WO 2017/077144 A1 ist ein Luftfahrzeug mit Vertikalstart- und Vertikallandefähigkeit und der Fähigkeit, Auftrieb sowohl mittels Rotoren als auch mittels fester Flügel zu erzeugen, offenbart. Dabei sind zwei vordere und zwei hintere Rotoren mit einem Mittelteil eines feststehenden Flügels mittels eines Tragelements verbunden und um eine Verbindungswelle schwenkbar verbunden. Dadurch kann die Neigung jedes Rotors von einer Längsvorschubstellung, in der die Rotoren das Fluggerät in einer Horizontallage antreiben, in eine Auftriebsstellung, in der die Rotoren vertikalen Auftrieb liefern, verändert werden kann.

In der Druckschrift DE 10 2014 000509 A1 ist ein Fluggerät mit Tragflächen offenbart, welches mit mindestens einer in horizontaler Schubrichtung ausgerichtete erste Antriebseinheit ausgestattet ist. Mittels der mit einer Verbrennungskraftmaschine ausgestatteten ersten Antriebseinheit kann in einer Horizontalfluglage des Fluggeräts ein Horizontalflug durchgeführt werden. Mittels elektrisch antreibbaren weiteren Schubeinheiten kann bei stillstehender erster Antriebseinheit ein senkrechter Start des Fluggeräts durchgeführt werden. Die weiteren elektrisch antreibbaren Schubeinheiten stehen bei dem Horizontalflug still.

Zur Steuerung des Gier- und Rollwinkels sind insbesondere von Multikoptern Steuerungsverfahren bekannt, bei denen das gewünschte Gieren und Rollen durch eine geeignete Ansteuerung der bei Multikoptern nicht schwenkbaren Antriebseinheiten erreicht wird. Dabei wird die von den jeweiligen Antriebseinheiten bereitgestellte Leistung antriebsindividuell vorgegeben, um über die auf diese Weise erzeugten Auftriebsunterschiede und Drehmomentdifferenzen das Gieren und Rollen zu erzeugen.

Durch den Roll-, Nick- und Gierwinkel wird üblicherweise eine Orientierung des Flugzeugs im dreidimensionalen Raum beschrieben. Dabei beschreiben die verschiedenen Winkel Drehwinkel des Flugzeugs ausgehend von einer Nulllage, die beispielsweise der Ausrichtung des auf dem Boden stehenden Flugzeugs entsprechen kann, um eine Längs-, Quer- und Vertikalachse des Flugzeugs.

Als Aufgabe der Erfindung wird es angesehen, ein entsprechendes Steuerungsverfahren zur Steuerung des Gier- und Rollwinkels durch geeignete Ansteuerung der Antriebseinheiten für senkrecht startende Flugzeuge bereitzustellen, mit dem die Steuerung sowohl im Vertikalflug als auch beim Übergang in den und im Horizontalflug möglich ist.

Diese Aufgabe wird erfindungsgemäß durch ein Steuerungsverfahren zur Steuerung eines Gier- und eines Rollwinkels eines senkrecht startenden Flugzeugs der eingangs beschriebenen Art gelöst,

- wobei eine von den Antriebseinheiten jeweils erzeugte Leistung angepasst wird, um einen vorgegebenen Sollgierwinkel und einen vorgegebenen Sollrollwinkel zu erreichen,
- wobei in einem Ermittlungsschritt ein erster Giersteuerungsparameter $g_1$ und ein zweiter Giersteuerungsparameter $g_2$ sowie ein erster Rollsteuerungsparameter $r_1$ und ein zweiter Rollsteuerungsparameter $r_2$ ermittelt werden, wobei der erste Giersteuerungsparameter und der erste Rollsteuerungsparameter Vertikalsteuerungsparameter zur Erreichung des Sollgierwinkels und des Sollrollwinkels in der Vertikalfluglage sind, wobei der zweite Giersteuerungsparameter und der zweite Rollsteuerungsparameter Horizontalsteuerungsparameter zur Erreichung des Sollgierwinkels und des Sollrollwinkels in der Horizontalfluglage sind,
- wobei in einem nachfolgenden Überblendungsschritt aus den Vertikalsteuerungsparametern und den Horizontalsteuerungsparametern in Abhängigkeit des Schwenkwinkels über eine Überblendungsvorschrift für jede Antriebseinheit ein Ansteuerungsparameter bestimmt wird,
- und wobei anschließend eine Leistung der Antriebseinheiten unter Berücksichtigung der Ansteuerungsparameter vorgegeben wird.

In sämtlichen Schwenkpositionen der Antriebseinheiten sind unterschiedliche Ansteuerungsparameter erforderlich, um das gewünschte Gier- und Rollverhalten zu erreichen. Durch die erfindungsgemäße fortlaufende Berechnung der Horizontalsteuerparameter und der Vertikalsteuerparameter sowie die Überblendung der für den Horizontalflug und den Vertikalflug bestimmten Parameter, kann das Steuerungsverfahren besonders einfach realisiert werden, da das Steuerungsverfahren nur für die beiden Extreme Horizontalfluglage und Vertikalfluglage ausgelegt werden muss. Zur Ermittlung der Horizontalsteuerungsparameter und der Vertikalsteuerungsparameter können aus dem Stand der Technik bekannte Steuer- und Regelungsverfahren verwendet werden. Bei den Ansteuerungsparametern kann es sich erfindungsgemäß beispielsweise um Leistungsdifferenzwerte handeln, die die von den Antriebseinheiten zur Erreichung des Sollgier- und -rollwinkels erforderliche Abweichung von der Gesamtleistung beschreiben, die der beispielsweise von einem Piloten angeforderten Leistungsanforderung entspricht. Die Ansteuerungsparameter werden vorteilhafterweise aus Rollsteuerungsparametern und Giersteuerungsparametern bestimmt, die Absolutwerte der erforderlichen Leistungsdifferenzwerte im Horizontalflug und im Vertikalflug darstellen.

Vorteilhafterweise ist erfindungsgemäß vorgesehen, dass jede Antriebsgruppe eine erste und eine zweite Antriebseinheit aufweist, wobei die erste Antriebseinheit und die zweite Antriebseinheit jeweils in eine Horizontalfluglage und eine Vertikalfluglage um einen Schwenkwinkel $\alpha$ schwenkbar beabstandet zu dem Rumpf angeordnet sind. Vorteilhafterweise ist erfindungsgemäß vorgesehen, dass die ersten Antriebseinheiten und/oder die zweiten Antriebseinheiten an einander gegenüberliegenden Flügeln des Flugzeugs angeordnet sind. Es ist aber beispielsweise auch möglich und erfindungsgemäß vorgesehen, dass die Antriebseinheiten beabstandet zu dem Rumpf an dem Rumpf vorteilhafterweise durch geeignete Tragrahmen angeordnet sind. Die Antriebseinheiten können erfindungsgemäß vorteilhafterweise Rotoren aufweisen.

Bei einer Vereinfachung des beschriebenen Verfahrens ist vorteilhafterweise vorgesehen, dass der zweite Giersteuerungsparameter auf Grundlage des ersten Giersteuerungsparameters durch Multiplikation mit einem Gierfaktor bestimmt wird und/oder dass der zweite Rollsteuerungsparameter auf Grundlage des ersten Rollsteuerungsparameters durch Multiplikation mit einem Rollfaktor bestimmt wird. Es ist auch möglich und erfindungsgemäß vorgesehen, dass die jeweils ersten Steuerungsparameter durch Multiplikation der jeweiligen zweiten Steuerungsparameter mit dem zugehörigen Faktor ermittelt werden.

Vorteilhafterweise ist erfindungsgemäß vorgesehen, dass in dem Ermittlungsschritt ein Istgierwinkel und ein Istrollwinkel bestimmt werden und dass die Steuerungsparameter jeweils ausgehend von dem Sollgierwinkel und dem Sollrollwinkel sowie dem Istgierwinkel und dem Istrollwinkel mit Hilfe eines Regelungsalgorithmus bestimmt werden. Der Istgierwinkel und der Istrollwinkel können vorteilhafterweise mit Hilfe geeigneter Sensoren erfasst und an eine den Regelungsalgorithmus und/oder das Steuerungsverfahren ausführenden Microcontroller bzw. Flightcontroller übergeben werden.

Erfindungsgemäß ist vorteilhafterweise vorgesehen, dass der erste Giersteuerungsparameter auf Grundlage des Sollgierwinkels und des Istgierwinkels mit einem ersten Gierregelungsalgorithmus bestimmt wird und/oder dass der zweite Giersteuerungsparameter auf Grundlage des Sollgierwinkels und des Istgierwinkels mit einem zweiten Gierregelungsalgorithmus bestimmt wird und/oder dass der erste Rollsteuerungsparameter auf Grundlage des Sollrollwinkels und des Istrollwinkels mit einem ersten Rollregelungsalgorithmus bestimmt wird und/oder dass der zweite Rollsteuerungsparameter auf Grundlage des Sollrollwinkels und des Istrollwinkels mit einem zweiten Rollregelungsalgorithmus bestimmt wird. Durch die Verwendung mehrerer unabhängiger Regelungsalgorithmen zur Bestimmung der Steuerungsparameter kann die Auslegung der einzelnen Regelungsalgorithmen erheblich vereinfacht werden, da lediglich SISO-Systeme betrachtet werden müssen. Kopplungen zwischen den Ausgangsgrößen können anschließend gegebenenfalls durch die vorteilhafterweise nichtlineare Überblendung der verschiedenen Steuerungsparameter berücksichtigt werden.

Bei einer besonders vorteilhaften Ausgestaltung des erfindungsgemäßen Verfahrens ist vorgesehen, dass es sich bei dem ersten Gierregelungsalgorithmus und/oder dem zweiten Gierregelungsalgorithmus und/oder dem ersten Rollregelungsalgorithmus und/oder dem zweiten Rollregelungsalgorithmus um einen linearen Regler mit P- oder PD-Anteil handelt. Die Verwendung linearer Regler mit P- oder PD-Anteil ist besonders einfach. Vorteilhafterweise können die Regelungsalgorithmen zusätzlich auch einen I-Anteil aufweisen.

Vorteilhafterweise wird der erste Giersteuerungsparameter $g_1$ mit einem PD-Regler ausgehend von dem vorteilhafterweise mit geeigneten Sensoren ermittelten Istgierwinkel $y_{\gamma z}$ sowie der vorteilhafterweise ebenfalls sensorisch erfassten Istgierrate $\dot{y}_{\gamma z}$ und ausgehend von dem vorgegebenen Sollgierwinkel $w_{\gamma z}$ nach folgender Vorschrift ermittelt:

$$g_1 = \left(P_{g_1} \cdot \left(w_{\gamma z} - y_{\gamma z}\right) - \dot{y}_{\gamma z}\right) \cdot D_{g_1}$$

Der Faktor $P_{g_1}$ stellt den P-Anteil des PD-Regler und der Faktor $D_{g_1}$ den D-Anteil des PD-Regler zur Bestimmung des ersten Giersteuerungsparameters $g_1$ dar. Auf vergleichbare Weise werden der erste Rollsteuerungsparameter $r_1$, der zweite Giersteuerungsparameter $g_2$ und der zweite Rollsteuerungsparameter $r_2$ nach folgenden Vorschriften bestimmt, wobei zusätzlich der vorteilhafterweise mit geeigneten Sensoren erfasste Istrollwinkel $y_{\gamma x}$, die ebenfalls vorteilhafterweise sensorisch erfasste Istrollrate $\dot{y}_{\gamma x}$ und der vorgegebene Sollrollwinkel $w_{\gamma x}$ verwendet werden:

$$r_1 = \left(P_{r_1} \cdot \left(w_{\gamma x} - y_{\gamma x}\right) - \dot{y}_{\gamma x}\right) \cdot D_{r_1}$$

$$g_2 = \left(P_{g_2} \cdot \left(w_{\gamma z} - y_{\gamma z}\right) - \dot{y}_{\gamma z}\right) \cdot D_{g_2}$$

$$r_2 = \left(P_{r_2} \cdot \left(w_{\gamma x} - y_{\gamma x}\right) - \dot{y}_{\gamma x}\right) \cdot D_{r_2}$$

Vorteilhafterweise ist erfindungsgemäß vorgesehen, dass der P-Anteil $P_{g_1}$ und der D-Anteil $D_{g_1}$ zur Bestimmung des ersten Giersteuerungsparameters $g_1$ dem P-Anteil $P_{r_2}$ und dem D-Anteil $D_{r_2}$ des PD-Reglers zur Bestimmung des zweiten Rollsteuerungsparameters $r_2$ entspricht und dass der P-Anteil $P_{r_1}$ und der D-Anteil $D_{r_1}$ zur Bestimmung des ersten Rollsteuerungsparameters $r_1$ dem P-Anteil $P_{g_2}$ und dem D-Anteil $D_{g_2}$ des PD-Reglers zur Bestimmung des zweiten Giersteuerungsparameters $g_2$ entspricht.

Zur Bestimmung des Istrollwinkels $y_{\gamma x}$, der Istrollrate $\dot{y}_{\gamma x}$, des Istgierwinkels $y_{\gamma z}$ und der Istgierrate $\dot{y}_{\gamma z}$ weist das Flugzeug vorteilhafterweise ein Gyroskop, einen Beschleunigungssensor sowie einen Kompass auf, wobei die benötigten Winkel und Raten auf Grundlage aus dem Stand der Technik bekannter Verfahren wie beispielsweise einem Kalman-Filter aus den mit diesen Sensoren erfassten Messgrößen bestimmt werden.

Erfindungsgemäß ist auch vorgesehen, dass die Horizontalsteuerungsparameter und die Vertikalsteuerungsparameter unter Verwendung jeweils eines oder eines gemeinsamen Regelalgorithmus fortlaufend bestimmt werden. Bei dem jeweils verwendeten Regelalgorithmus kann es sich um einen linearen oder nichtlinearen Regler handeln.

Vorteilhafterweise ist vorgesehen, dass in dem Überblendungsschritt die Vertikalsteuerungsparameter und die Horizontalsteuerungsparameter jeweils mit einer antriebseinheitsspezifischen und schwenkwinkelabhängigen Bewertungsfunktion multipliziert werden und die Ansteuerungsparameter für jede Antriebseinheit durch eine Linearkombination der mit der antriebseinheitsspezifischen und schwenkwinkelabhängigen Bewertungsfunktion multiplizierten Vertikalsteuerungsparameter und der mit der antriebseinheitsspezifischen und schwenkwinkelabhängigen Bewertungsfunktion multiplizierten Horizontalsteuerungsparameter bestimmt werden. Vorteilhafterweise ist die Bewertungsfunktion eine nichtlineare Funktion in Abhängigkeit des Schwenkwinkels. Durch die nichtlineare Bewertung und anschließende Linearkombination können insbesondere bei Verwendung mehrerer unabhängiger Regler zur Ermittlung der ersten und zweiten Gier- und Rollsteuerungsparameter vorteilhafterweise auch unberücksichtigte Kopplungen zwischen den Regelstrecken berücksichtigt werden.

Erfindungsgemäß ist vorteilhafterweise vorgesehen, dass die Bewertungsfunktion der Vertikalsteuerungsparameter der Kosinus des Schwenkwinkels ist und dass die Bewertungsfunktion der Horizontalsteuerungsparameter der Sinus des Schwenkwinkels ist. Es hat sich herausgestellt, dass durch die Überblendung unter Verwendung von Sinus- und Kosinusfunktionen ein besonders stabiles Flugverhalten insbesondere während des Übergangs von der Vertikal- in die Horizontalfluglage und umgekehrt erreicht werden kann.

Bei einer besonders vorteilhaften Ausgestaltung des erfindungsgemäßen Verfahrens ist vorgesehen, dass ein Gierwinkel und ein Rollwinkel jeweils rechtsdrehend um eine Vertikalachse bzw. eine Längsachse des Flugzeugs definiert sind, wobei in dem Überblendungsschritt der Ansteuerungsparameter $AP_1$ einer ersten und aus Flugzeugdraufsicht links von der Längsachse angeordneten Antriebseinheit nach folgendem Schema berechnet wird:

$$AP_1 = \cos(\alpha) \cdot r_1 + \cos(\alpha) \cdot g_1 - \sin(\alpha) \cdot r_2 + \sin(\alpha) \cdot g_2, \qquad (1)$$

wobei in dem Überblendungsschritt der Ansteuerungsparameter $AP_2$ einer ersten und aus Flugzeugdraufsicht rechts von der Längsachse angeordneten Antriebseinheit nach folgendem Schema berechnet wird:

$$AP_2 = -\cos(\alpha) \cdot r_1 - \cos(\alpha) \cdot g_1 + \sin(\alpha) \cdot r_2 - \sin(\alpha) \cdot g_2, \qquad (2)$$

wobei in dem Überblendungsschritt der Ansteuerungsparameter $AP_3$ einer zweiten und aus Flugzeugdraufsicht links von der Längsachse angeordneten Antriebseinheit nach folgendem Schema berechnet wird:

$$AP_3 = \cos(\alpha) \cdot r_1 - \cos(\alpha) \cdot g_1 + \sin(\alpha) \cdot r_2 + \sin(\alpha) \cdot g_2, \qquad (3)$$

wobei in dem Überblendungsschritt der Ansteuerungsparameter $AP_4$ einer zweiten und aus Flugzeugdraufsicht rechts von der Längsachse angeordneten Antriebseinheit nach folgendem Schema berechnet wird:

$$AP_4 = -\cos(\alpha) \cdot r_1 + \cos(\alpha) \cdot g_1 - \sin(\alpha) \cdot r_2 - \sin(\alpha) \cdot g_2. \qquad (4)$$

Sofern die Antriebseinheiten Rotoren aufweisen wird vorteilhafterweise eine Rotordrehrichtung bei der Bestimmung der Ansteuerungsparameter berücksichtigt. Um ausgehend von den so ermittelten Ansteuerungsparametern, die vorteilhafterweise Leistungsdifferenzwerte darstellen, Leistungsansteuerungswerte zu bestimmen, mit denen die einzelnen Antriebseinheiten anschließend angesteuert werden, ist erfindungsgemäß vorgesehen, dass Leistungsansteuerungswerte $u_1, u_2, u_3, u_4$ der Antriebseinheiten, mit denen die Antriebseinheiten angesteuert werden, um die gewünschte Leistung der einzelnen Antriebseinheiten zu erzeugen, unter Berücksichtigung einer Leistungsanforderungsgröße $F$ und eines Nickparameters $n$ folgendermaßen berechnet werden:

$$u_1 = F - n + AP_1, \qquad (5)$$

$$u_2 = F - n + AP_2, \qquad (6)$$

$$u_3 = F + n + AP_3, \qquad (7)$$

$$u_4 = F + n + AP_4. \qquad (8)$$

Bei der Leistungsanforderungsgröße kann es sich erfindungsgemäß beispielsweise um die Gesamtleistung handeln, die von einem Piloten angefordert wird. Der Nickparameter beschreibt vorteilhafterweise einen Leistungsdifferenzwert, der zur Erreichung eines vorgegebenen Sollnickwinkels erforderlich ist.

Vorteilhafterweise ist erfindungsgemäß vorgesehen, dass in der Horizontalfluglage die ersten Antriebseinheiten in Richtung der Vertikalachse beabstandet zu den zweiten Antriebseinheiten angeordnet sind und dass in der Vertikalfluglage die ersten Antriebseinheiten in Richtung der Längsachse beabstandet zu den zweiten Antriebseinheiten angeordnet sind. Vorteilhafterweise ist erfindungsgemäß vorgesehen, dass in der Horizontalfluglage die ersten Antriebseinheiten oberhalb einer oberen Flügelfläche und die zweiten Antriebseinheiten unterhalb einer unteren Flügelfläche an dem Flügel angeordnet sind, und dass in der Vertikalfluglage die ersten Antriebseinheiten und die zweiten Antriebseinheiten in Horizontalflugrichtung vor und hinter dem Flügel angeordnet sind.

Weitere vorteilhafte Ausgestaltungen des erfindungsgemäßen Verfahrens werden anhand eines in der Zeichnung dargestellten Ausführungsbeispiels näher erläutert.

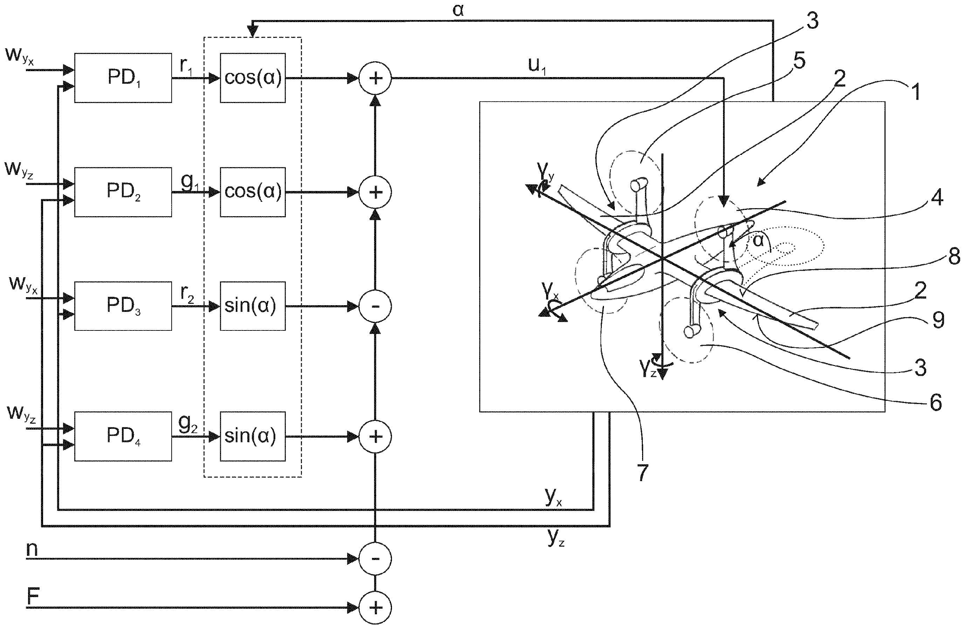

In Figur 1 ist schematisch ein senkrecht startendes Flugzeug 1 dargestellt. Das Flugzeug 1 weist zwei an einander gegenüberliegenden Flügeln 2 des Flugzeugs 1 angeordnete Antriebsgruppen 3 auf, wobei jede Antriebsgruppe 3 eine erste 4, 5 und eine zweite Antriebseinheit 6, 7 aufweist. Die erste Antriebseinheit 4, 5 und die zweite Antriebseinheit 6, 7 sind jeweils in eine Horizontalfluglage und eine Vertikalfluglage um einen Schwenkwinkel $\alpha$ schwenkbar an dem Flügel 2 angeordnet. In der Darstellung befinden sich die Antriebseinheiten 4, 5, 6, 7 in der Horizontalfluglage. Die ersten Antriebseinheiten 4, 5 sind oberhalb einer oberen Flügelfläche 8 und die zweiten Antriebseinheiten 6, 7 unterhalb einer unteren Flügelfläche 9 an den Flügeln 2 angeordnet. Wenn die Antriebseinheiten 4, 5, 6, 7 in die Vertikalfluglage verschwenkt werden, sind die ersten Antriebseinheiten 4, 5 und die zweiten Antriebseinheiten 6, 7 in Horizontalflugrichtung vor und hinter den Flügeln 2 angeordnet. Ein Gierwinkel $\gamma_z$, ein Rollwinkel $\gamma_x$ und ein Nickwinkel $\gamma_y$ sind jeweils rechtsdrehend um eine Vertikalachse, eine Längsachse und eine Querachse des Flugzeugs 1 definiert.

Die Antriebseinheiten 4, 5, 6, 7 weisen jeweils Rotoren auf. Die Rotoren der ersten Antriebseinheit 4 und der zweiten Antriebseinheit 7 sind linksdrehend und die Rotoren der ersten Antriebseinheit 5 und der zweiten Antriebseinheit 6 sind rechtsdrehend.

Zur Steuerung des Gierwinkels $\gamma_z$ und des Rollwinkels $\gamma_x$ werden in einem Ermittlungsschritt eines erfindungsgemäßen Steuerungsverfahrens zunächst ausgehend von einem vorgegebenen Sollgierwinkel $w_{\gamma z}$ und einem vorgegebenen Sollrollwinkel $w_{\gamma x}$ mit Hilfe linearer Regler $PD_1$, $PD_2$, $PD_3$, und $PD_4$ erste und zweite Gier- und Rollsteuerungsparameter $g_1, g_2, r_1, r_2$ ermittelt. Anschließend werden aus den Rollsteuerparametern $g_1$, $g_2$, $r_1$, $r_2$ in einem Überblendungsschritt für jede Antriebseinheit 4, 5, 6, 7 Ansteuerparameter $u_1, u_2, u_3, u_4$ bestimmt. In der Figur ist exemplarisch die Bestimmung des Ansteuerparameters $u_1$ für die erste Antriebseinheit 4 dargestellt. Die Ermittlung erfolgt anhand der vorangehend beschrieben Formeln 1 bis 8.

**Patentansprüche**

1. Steuerungsverfahren zur Steuerung eines Gierwinkels $\gamma_z$ und eines Rollwinkels $\gamma_x$ eines senkrecht startenden Flugzeugs (1) mit mindestens zwei in einander gegenüberliegenden Seitenbereichen des Flugzeugs (1) beabstandet zu einem Rumpf des Flugzeugs angeordneten Antriebsgruppen (3), wobei jede Antriebsgruppe (3) mindestens eine erste Antriebseinheit (4, 5) aufweist, wobei die erste Antriebseinheit (4, 5) in eine Horizontalfluglage und eine Vertikalfluglage um einen Schwenkwinkel $\alpha$ schwenkbar beabstandet zu dem Rumpf angeordnet ist, wobei eine von den Antriebseinheiten (4, 5, 6, 7) jeweils erzeugte Leistung angepasst wird, um einen vorgegebenen Sollgierwinkel $w_{\gamma z}$ und einen vorgegebenen Sollrollwinkel $w_{\gamma x}$ zu erreichen, **dadurch gekennzeichnet, dass** in einem Ermittlungsschritt ein erster Giersteuerungsparameter $g_1$ und ein zweiter Giersteuerungsparameter $g_2$ sowie ein erster Rollsteuerungsparameter $r_1$ und ein zweiter Rollsteuerungsparameter $r_2$ ermittelt werden, wobei der erste Giersteuerungsparameter $g_1$ und der erste Rollsteuerungsparameter $r_1$ Vertikalsteuerungsparameter zur Erreichung des Sollgierwinkels $w_{\gamma z}$ und des Sollrollwinkels $w_{\gamma x}$ in der Vertikalfluglage sind, wobei der zweite Giersteuerungsparameter $g_2$ und der zweite Rollsteuerungsparameter $r_2$ Horizontalsteuerungsparameter zur Erreichung des Sollgierwinkels $w_{\gamma z}$ und des Sollrollwinkels $w_{\gamma x}$ in der Horizontalfluglage sind, wobei in einem nachfolgenden Überblendungsschritt aus den Vertikalsteuerungsparametern und den Horizontalsteuerungsparametern in Abhängigkeit des Schwenkwinkels $\alpha$ über eine Überblendungsvorschrift für jede Antriebseinheit (4, 5, 6, 7) ein Ansteuerungsparameter bestimmt wird, und wobei anschließend eine Leistung der Antriebseinheiten (4, 5, 6, 7) unter Berücksichtigung der Ansteuerungsparameter vorgegeben wird.

2. Steuerungsverfahren gemäß Anspruch 1, **dadurch gekennzeichnet, dass** jede Antriebsgruppe (3) eine erste (4, 5) und eine zweite Antriebseinheit (6, 7) aufweist, wobei die erste Antriebseinheit (4, 5) und die zweite Antriebseinheit (6, 7) jeweils in eine Horizontalfluglage und eine Vertikalfluglage um einen Schwenkwinkel $\alpha$ schwenkbar beabstandet zu dem Rumpf angeordnet sind.

3. Steuerungsverfahren gemäß Anspruch 1 oder Anspruch 2, **dadurch gekennzeichnet, dass** der zweite Giersteuerungsparameter $g_2$ auf Grundlage des ersten Giersteuerungsparameters $g_1$ durch Multiplikation mit einem Gierfaktor bestimmt wird und/oder dass der zweite Rollsteuerungsparameter $r_2$ auf Grundlage des ersten Rollsteuerungsparameters $r_1$ durch Multiplikation mit einem Rollfaktor bestimmt wird.

4. Steuerungsverfahren gemäß einem der voranstehenden Ansprüche, **dadurch gekennzeichnet, dass** in dem Ermittlungsschritt ein Istgierwinkel $y_{\gamma z}$ und ein Istrollwinkel $\dot{y}_{\gamma x}$ bestimmt werden und dass die Steuerungsparameter jeweils ausgehend von dem Sollgierwinkel $w_{\gamma z}$ und dem Sollrollwinkel $w_{\gamma x}$ sowie dem Istgierwinkel $y_{\gamma z}$ und dem Istrollwinkel $y_{\gamma x}$ mit Hilfe eines Regelungsalgorithmus bestimmt werden.

5. Steuerungsverfahren gemäß Anspruch 4, **dadurch gekennzeichnet, dass** der erste Giersteuerungsparameter $g_1$ auf Grundlage des Sollgierwinkels $w_{\gamma z}$ und des Istgierwinkels $y_{\gamma z}$ mit einem ersten Gierregelungsalgorithmus ($PD_2$) bestimmt wird und/oder dass der zweite Giersteuerungsparameter $g_2$ auf Grundlage des Sollgierwinkels $w_{\gamma z}$ und des Istgierwinkels $y_{\gamma z}$ mit einem zweiten Gierregelungsalgorithmus ($PD_4$) bestimmt wird und/oder dass der erste Rollsteuerungsparameter $r_1$ auf Grundlage des Sollrollwinkels $w_{\gamma x}$ und des Istrollwinkels $y_{\gamma x}$ mit einem ersten Rollregelungsalgorithmus ($PD_1$) bestimmt wird und/oder dass der zweite Rollsteuerungsparameter $r_2$ auf Grundlage

des Sollrollwinkels $w_{\gamma x}$ und des Istrollwinkels $y_{\gamma x}$ mit einem zweiten Rollregelungsalgorithmus (PD$_3$) bestimmt wird.

6. Steuerungsverfahren gemäß Anspruch 5, **dadurch gekennzeichnet, dass** es sich bei dem ersten Gierregelungsalgorithmus (PD$_2$) und/oder dem zweiten Gierregelungsalgorithmus (PD$_4$) und/oder dem ersten Rollregelungsalgorithmus (PD$_1$) und/oder dem zweiten Rollregelungsalgorithmus (PD$_3$) um einen linearen Regler mit P- oder PD-Anteil handelt.

7. Steuerungsverfahren gemäß einem der voranstehenden Ansprüche, **dadurch gekennzeichnet, dass** in dem Überblendungsschritt die Vertikalsteuerungsparameter und die Horizontalsteuerungsparameter jeweils mit einer antriebseinheitsspezifischen und schwenkwinkelabhängigen Bewertungsfunktion multipliziert werden und die Ansteuerungsparameter für jede Antriebseinheit (4, 5, 6, 7) durch eine Linearkombination der mit der antriebseinheitsspezifischen und schwenkwinkelabhängigen Bewertungsfunktion multiplizierten Vertikalsteuerungsparameter und der mit der antriebseinheitsspezifischen und schwenkwinkelabhängigen Bewertungsfunktion multiplizierten Horizontalsteuerungsparameter bestimmt werden.

8. Steuerungsverfahren gemäß Anspruch 7, **dadurch gekennzeichnet, dass** die Bewertungsfunktion der Vertikalsteuerungsparameter der Kosinus des Schwenkwinkels $\alpha$ ist und dass die Bewertungsfunktion der Horizontalsteuerungsparameter der Sinus des Schwenkwinkels $\alpha$ ist.

9. Steuerungsverfahren gemäß Anspruch 8, **dadurch gekennzeichnet**, wobei ein Gierwinkel $\gamma_z$ und ein Rollwinkel $\gamma_x$ jeweils rechtsdrehend um eine Vertikalachse bzw. eine Längsachse des Flugzeugs (1) definiert sind, wobei in dem Überblendungsschritt der Ansteuerungsparameter $AP_1$ einer ersten und aus Flugzeugdraufsicht links von der Längsachse angeordneten Antriebseinheit (4) nach folgendem Schema berechnet wird:

$$AP_1 = \cos(\alpha) \cdot r_1 + \cos(\alpha) \cdot g_1 - \sin(\alpha) \cdot r_2 + \sin(\alpha) \cdot g_2,$$

wobei in dem Überblendungsschritt der Ansteuerungsparameter $AP_2$ einer ersten und aus Flugzeugdraufsicht rechts von der Längsachse angeordneten Antriebseinheit (5) nach folgendem Schema berechnet wird:

$$AP_2 = -\cos(\alpha) \cdot r_1 - \cos(\alpha) \cdot g_1 + \sin(\alpha) \cdot r_2 - \sin(\alpha) \cdot g_2,$$

wobei in dem Überblendungsschritt der Ansteuerungsparameter $AP_3$ einer zweiten und aus Flugzeugdraufsicht links von der Längsachse angeordneten Antriebseinheit (6) nach folgendem Schema berechnet wird:

$$AP_3 = \cos(\alpha) \cdot r_1 - \cos(\alpha) \cdot g_1 + \sin(\alpha) \cdot r_2 + \sin(\alpha) \cdot g_2,$$

wobei in dem Überblendungsschritt der Ansteuerungsparameter $AP_4$ einer zweiten und aus Flugzeugdraufsicht rechts von der Längsachse angeordneten Antriebseinheit (7) nach folgendem Schema berechnet wird:

$$AP_4 = -\cos(\alpha) \cdot r_1 + \cos(\alpha) \cdot g_1 - \sin(\alpha) \cdot r_2 - \sin(\alpha) \cdot g_2.$$

10. Steuerungsverfahren gemäß Anspruch 9, **dadurch gekennzeichnet, dass** Leistungsansteuerungswerte $u_1, u_2, u_3, u_4$ der Antriebseinheiten (4, 5, 6, 7), mit denen die Antriebseinheiten (4, 5, 6, 7) angesteuert werden, um die gewünschte Leistung der einzelnen Antriebseinheiten (4, 5, 6, 7) zu erzeugen, unter Berücksichtigung einer Leistungsanforderungsgröße $F$ und eines Nickparameters $n$ folgendermaßen berechnet werden:

$$u_1 = F - n + AP_1,$$

$$u_2 = F - n + AP_2,$$

$$u_3 = F + n + AP_3,$$

$$u_4 = F + n + AP_4.$$

## Claims

1. Control method for controlling a yaw angle $\gamma_z$ and a roll angle $\gamma_x$ of a vertical take-off aircraft (1) comprising at least two drive groups (3) arranged in opposite side regions of the aircraft (1) so as to be spaced apart from a fuselage of the aircraft, wherein each drive group (3) comprises at least one first drive unit (4, 5), wherein the first drive unit (4, 5) is arranged so as to be spaced apart from the fuselage to pivot about a pivot angle $\alpha$ into a horizontal flight position and a vertical flight position, wherein power generated by each of the drive units (4, 5, 6, 7) is adapted in order to reach a predetermined target yaw angle $w_{\gamma_z}$ and a predetermined target roll angle $w_{\gamma_x}$, **characterised in that**, in a determination step, a first yaw control parameter $g_1$ and a second yaw control parameter $g_2$ as well as a first roll control parameter $r_1$ and a second roll control parameter $r_2$ are determined, wherein the first yaw control parameter $g_1$ and the first roll control parameter $r_1$ are vertical control parameters for reaching the target yaw angle $w_{\gamma_z}$ and the target roll angle $w_{\gamma_x}$ in the vertical flight position, wherein the second yaw control parameter $g_2$ and the second roll control parameter $r_2$ are horizontal control parameters for reaching the target yaw angle $w_{\gamma_z}$ and the target roll angle $w_{\gamma_x}$ in the horizontal flight position, wherein, in a subsequent superimposing step, an actuation parameter is determined by means of a superimposing rule for each drive unit (4, 5, 6, 7) from the vertical control parameters and the horizontal control parameters on the basis of the pivot angle $\alpha$, and wherein a power of the drive units (4, 5, 6, 7) then is predetermined taking into account the actuation parameters.

2. Control method according to claim 1, **characterised in that** each drive group (3) comprises a first drive unit (4, 5) and a second drive unit (6, 7), wherein the first drive unit (4, 5) and the second drive unit (6, 7) each are arranged so as to be spaced apart from the fuselage to pivot about a pivot angle $\alpha$ into a horizontal flight position and a vertical flight position.

3. Control method according to claim 1 or claim 2, **characterised in that** the second yaw control parameter $g_2$ is determined on the basis of the first yaw control parameter $g_1$ by multiplication by a yaw factor and/or **in that** the second roll control parameter $r_2$ is determined on the basis of the first roll control parameter $r_1$ by multiplication by a roll factor.

4. Control method according to any of the preceding claims, **characterised in that**, in the determining step, an actual yaw angle $y_{\gamma_z}$ and an actual roll angle $y_{\gamma_x}$ are determined, and **in that** the control parameters are each determined by means of a control algorithm starting from the target yaw angle $w_{\gamma_z}$ and the target roll angle $w_{\gamma_x}$ as well as the actual yaw angle $y_{\gamma_z}$ and the actual roll angle $y_{\gamma_x}$.

5. Control method according to claim 4, **characterised in that** the first yaw control parameter $g_1$ is determined on the basis of the target yaw angle $w_{\gamma_z}$ and the actual yaw angle $y_{\gamma_z}$ using a first yaw control algorithm (PD$_2$) and/or **in that** the second yaw control parameter $g_2$ is determined on the basis of the target yaw angle $w_{\gamma_z}$ and the actual yaw angle $y_{\gamma_z}$ using a second yaw control algorithm (PD$_4$) and/or **in that** the first roll control parameter $r_1$ is determined on the basis of the target roll angle $w_{\gamma_x}$ and the actual roll angle $y_{\gamma_x}$ using a first roll control algorithm (PD$_1$) and/or **in that** the second roll control parameter $r_2$ is determined on the basis of the target roll angle $w_{\gamma_x}$ and the actual roll angle $y_{\gamma_x}$ using a second roll control algorithm (PD$_3$) .

6. Control method according to claim 5, **characterised in that** the first yaw control algorithm (PD$_2$) and/or the second yaw control algorithm (PD$_4$) and/or the first roll control algorithm (PD$_1$) and/or the second roll control algorithm (PD$_3$) is a linear controller having a P or PD term.

7. Control method according to any of the preceding claims, **characterised in that**, in the superimposing step, the vertical control parameters and the horizontal control parameters are each multiplied by a drive-unit-specific and pivot-angle-specific evaluation function and the actuation parameters for each drive unit (4, 5, 6, 7) are determined by a linear combination of the vertical control parameters multiplied by the drive-unit-specific and pivot-angle-specific evaluation function and the horizontal control parameters multiplied by the drive-unit-specific and pivot-angle-specific evaluation function.

8. Control method according to claim 7, **characterised in that** the evaluation function of the vertical control parameters is the cosine of the pivot angle $\alpha$ and **in that** the evaluation function of the horizontal control parameters is the sine of the pivot angle $\alpha$.

9. Control method according to claim 8, **characterised in that** a yaw angle $\gamma_z$ and a roll angle $\gamma_x$ are defined in a clockwise manner about a vertical axis and a longitudinal axis, respectively, of the aircraft (1), wherein in the superimposing step, the actuation parameter $AP_1$ of a first drive unit (4) arranged to the left of the longitudinal axis in a plan view of the aircraft is calculated according to the following model:

$$AP_1 = \cos(\alpha) \cdot r_1 + \cos(\alpha) \cdot g_1 - \sin(\alpha) \cdot r_2 + \sin(\alpha) \cdot g_2,$$

wherein in the superimposing step, the actuation parameter $AP_2$ of a first drive unit (5) arranged to the right of the longitudinal axis in a plan view of the aircraft is calculated according to the following model:

$$AP_2 = -\cos(\alpha) \cdot r_1 - \cos(\alpha) \cdot g_1 + \sin(\alpha) \cdot r_2 - \sin(\alpha) \cdot g_2,$$

wherein in the superimposing step, the actuation parameter $AP_3$ of a second drive unit (6) arranged to the left of the longitudinal axis in a plan view of the aircraft is calculated according to the following model:

$$AP_3 = \cos(\alpha) \cdot r_1 - \cos(\alpha) \cdot g_1 + \sin(\alpha) \cdot r_2 + \sin(\alpha) \cdot g_2,$$

wherein in the superimposing step, the actuation parameter $AP_4$ of a second drive unit (7) arranged to the right of the longitudinal axis in a plan view of the aircraft is calculated according to the following model:

$$AP_4 = -\cos(\alpha) \cdot r_1 + \cos(\alpha) \cdot g_1 - \sin(\alpha) \cdot r_2 - \sin(\alpha) \cdot g_2.$$

10. Control method according to claim 9, **characterised in that** power actuation values $u_1$, $u_2$, $u_3$, $u_4$ of the drive units (4, 5, 6, 7), by means of which the drive units (4, 5, 6, 7) are actuated, are calculated as follows, taking into account a power requirement variable $F$ and a pitch parameter $n$, in order to generate the desired power of the individual drive units (4, 5, 6, 7):

$$u_1 = F - n + AP_1,$$

$$u_2 = F - n + AP_2,$$

$$u_3 = F + n + AP_3,$$

$$u_4 = F + n + AP_4.$$

**Revendications**

1. Procédé de commande pour commander un angle de lacet $\gamma_z$ et un angle de roulis $\gamma_x$ d'un avion (1) décollant à la verticale avec au moins deux groupes d'entraînement (3) disposés dans des zones latérales se faisant face les unes les autres de l'avion (1) par rapport à un fuselage de l'avion, dans lequel chaque groupe d'entraînement (3) présente au moins une première unité d'entraînement (4, 5), dans lequel la première unité d'entraînement (4, 5) est disposée dans une position de vol horizontale et une position de vol verticale de manière à pouvoir pivoter autour d'un angle de pivotement $\alpha$ de manière espacée par rapport au fuselage, dans lequel une puissance respectivement générée par les unités d'entraînement (4, 5, 6, 7) est adaptée pour atteindre un angle de lacet théorique $w_{\gamma z}$ spécifié et un angle de roulis théorique $w_{\gamma x}$ spécifié, **caractérisé en ce que** lors d'une étape de détermination, un premier paramètre de commande de lacet $g_1$ et un deuxième paramètre de commande de lacet $g_2$ ainsi qu'un premier paramètre de commande de roulis $r_1$ et un deuxième paramètre de commande de roulis $r_2$ sont déterminés, dans lequel le premier paramètre de commande de lacet $g_1$ et le premier paramètre de commande de roulis $r_1$ sont des paramètres de commande verticale pour atteindre l'angle de lacet théorique $w_{\gamma z}$ et l'angle de roulis théorique $w_{\gamma x}$ dans la position de vol vertical, dans lequel le deuxième paramètre de commande de lacet $g_2$ et le deuxième paramètre de commande de roulis $r_2$ sont des paramètres de commande horizontale pour atteindre l'angle de lacet théorique $w_{\gamma z}$ et l'angle de roulis théorique $w_{\gamma x}$ dans la position de vol horizontale, dans lequel lors d'une étape de changement graduel qui suit, un paramètre de pilotage est défini à partir des paramètres de commande verticale et des paramètres de commande horizontale en fonction de l'angle de pivotement $\alpha$ par l'intermédiaire d'une spécification de changement graduel pour chaque unité d'entraînement (4, 5, 6, 7), et dans lequel ensuite une puissance des unités d'entraînement (4, 5, 6, 7) est spécifiée en tenant compte des paramètres de pilotage.

2. Procédé de commande selon la revendication 1, **caractérisé en ce que** chaque groupe d'entraînement (3) présente une première (4, 5) et une deuxième unité d'entraînement (6, 7), dans lequel la première unité d'entraînement (4, 5) et la deuxième unité d'entraînement (6, 7) sont disposées de manière espacée par rapport au fuselage de manière à pouvoir pivoter autour d'un angle de pivotement $\alpha$ respectivement dans une position de vol horizontale et dans une position de vol verticale.

3. Procédé de commande selon la revendication 1 ou la revendication 2, **caractérisé en ce que** le deuxième paramètre de commande de lacet $g_2$ est défini sur la base du premier paramètre de commande de lacet $g_1$ par multiplication avec un facteur de lacet, et/ou que le deuxième paramètre de commande de roulis $r_2$ est défini sur la base du premier paramètre de commande de roulis $r_1$ par multiplication avec un facteur de roulis.

4. Procédé de commande selon l'une quelconque des revendications précédentes, **caractérisé en ce que** lors de l'étape de détermination, un angle de lacet réel $y_{\gamma z}$ et un angle de roulis réel $y_{\gamma x}$ sont définis, et que les paramètres de commande sont définis respectivement en partant de l'angle de lacet théorique $w_{\gamma z}$ et de l'angle de roulis théorique $w_{\gamma z}$ ainsi que de l'angle de lacet réel $y_{\gamma z}$ et de l'angle de roulis réel $y_{\gamma x}$ à l'aide d'un algorithme de régulation.

5. Procédé de commande selon la revendication 4, **caractérisé en ce que** le premier paramètre de commande de lacet $g_1$ est défini sur la base de l'angle de lacet théorique $w_{\gamma z}$ et de l'angle de lacet réel $y_{\gamma z}$ avec un premier algorithme de régulation de lacet ($PD_2$), et/ou que le deuxième paramètre de commande de lacet $g_2$ est défini sur la base de l'angle de lacet théorique $w_{\gamma z}$ et de l'angle de lacet réel $y_{\gamma z}$ avec un deuxième algorithme de régulation de lacet ($PD_4$), et/ou que le premier paramètre de commande de roulis $r_1$ est défini sur la base de l'angle de roulis théorique $w_{\gamma x}$ et de l'angle de roulis réel $y_{\gamma x}$ avec un premier algorithme de régulation de roulis ($PD_1$), et/ou que le deuxième paramètre de commande de roulis $r_2$ est défini sur la base de l'angle de roulis théorique $w_{\gamma x}$ et de l'angle de roulis réel $y_{y_x}$ avec un deuxième algorithme de régulation de roulis ($PD_3$).

6. Procédé de commande selon la revendication 5, **caractérisé en ce que** le premier algorithme de régulation de lacet ($PD_2$) et/ou le deuxième algorithme de régulation de lacet ($PD_4$) et/ou le premier algorithme de régulation de roulis ($PD_1$) et/ou le deuxième algorithme de régulation roulis ($PD_3$) sont un régulateur linéaire avec une fraction P ou PD.

7. Procédé de commande selon l'une quelconque des revendications précédentes, **caractérisé en ce que** lors de l'étape de changement graduel, les paramètres de commande verticale et les paramètres de commande horizontale sont multipliés respectivement avec une fonction d'évaluation spécifique à l'unité d'entraînement et dépendant de l'angle de pivotement, et les paramètres de pilotage sont définis pour chaque unité d'entraînement (4, 5, 6, 7) par une combinaison linéaire des paramètres de commande verticale multipliée avec la fonction d'évaluation spécifique à l'unité d'entraînement et dépendant de l'angle de pivotement et des paramètres de commande horizontale multipliés avec la fonction d'évaluation spécifique à l'unité d'entraînement et dépendant de l'angle de pivotement.

8. Procédé de commande selon la revendication 7, **caractérisé en ce que** la fonction d'évaluation des paramètres de commande verticale est le cosinus de l'angle de pivotement $\alpha$, et que la fonction d'évaluation des paramètres de commande horizontale est le sinus de l'angle de pivotement $\alpha$.

9. Procédé de commande selon la revendication 8, **caractérisé en ce qu'**un angle de lacet $\gamma_z$ et un angle de roulis $\gamma_x$ sont définis respectivement de manière à tourner vers la droite autour d'un axe vertical ou d'un axe longitudinal de l'avion (1), dans lequel lors de l'étape de changement graduel des paramètres de pilotage $AP_1$ d'une première unité d'entraînement (4) disposée, vue sur la vue du dessus de l'avion, à gauche de l'axe longitudinal, un calcul selon un schéma qui suit est effectué :

$$AP_1 = \cos(\alpha) \cdot r_1 + \cos(\alpha) \cdot g_1 - \sin(\alpha) \cdot r_2 + \sin(\alpha) \cdot g_2,$$

dans lequel lors de l'étape de changement graduel des paramètres de pilotage $AP_2$ d'une première unité d'entraînement (5) disposée, vue sur la vue du dessus de l'avion, à droite de l'axe longitudinal, un calcul selon un schéma qui suit est effectué :

$$AP_2 = -\cos(\alpha) \cdot r_1 - \cos(\alpha) \cdot g_1 + \sin(\alpha) \cdot r_2 - \sin(\alpha) \cdot g_2,$$

dans lequel lors de l'étape de changement graduel des paramètres de pilotage $AP_3$ d'une deuxième unité d'entraînement (6) disposée, vue sur la vue du dessus de l'avion, à gauche de l'axe longitudinal, un calcul selon un schéma qui suit est effectué :

$$AP_3 = \cos(\alpha) \cdot r_1 - \cos(\alpha) \cdot g_1 + \sin(\alpha) \cdot r_2 + \sin(\alpha) \cdot g_2,$$

dans lequel lors de l'étape de changement graduel des paramètres de pilotage $AP_4$ d'une deuxième unité d'entraînement (7) disposée ,vue sur la vue du dessus de l'avion, à droite de l'axe longitudinal, un calcul selon un schéma qui suit est effectué :

$$AP_4 = -\cos(\alpha) \cdot r_1 + \cos(\alpha) \cdot g_1 - \sin(\alpha) \cdot r_2 - \sin(\alpha) \cdot g_2.$$

10. Procédé de commande selon la revendication 9, **caractérisé en ce que** des valeurs de pilotage de puissance $u_1$, $u_2$, $u_3$, $u_4$ des unités d'entraînement (4, 5, 6, 7), à l'aide desquelles les unités d'entraînement (4, 5, 6, 7) sont pilotées pour générer la puissance souhaitée des diverses unités d'entraînement (4, 5, 6, 7), sont calculées en tenant compte d'une grandeur demandée de puissance F et d'un paramètre de tangage n comme suit :

$$u_1 = F - n + AP_1,$$

$$u_2 = F - n + AP_2,$$

$$u_3 = F + n + AP_3,$$

$$u_4 = F + n + AP_4.$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014016226 A1
- US 2012261523 A1
- WO 2017077144 A1
- DE 102014000509 A1